# EUROPÄISCHE PATENTSCHRIFT

(11) **EP 2 522 552 B1**
(45) Veröffentlichungstag und Bekanntmachung des Hinweises auf die Patenterteilung: **04.03.2015**
(21) Anmeldenummer: 12165688.8
(22) Anmeldetag: 26.04.2012
(51) Int. Cl.: B60R 16/027, H01R 35/02

(54) **Übertragungsvorrichtungen und Verfahren zum Übertragen eines elektrischen Stroms zu einer Komponente eines Lenkrades eines Kraftfahrzeugs**
Transmission devices and method for transmitting electric current to a component of a steering wheel of a motor vehicle
Procédé et dispositifs de transmission d'un courant électrique vers un composant d'un volant d'un véhicule automobile

(30) Priorität: 02.09.2011 US 201113224918; 10.05.2011 DE 102011075593
(43) Veröffentlichungstag der Anmeldung: 14.11.2012
(73) Patentinhaber: Takata AG, 63743 Aschaffenburg (DE)
(72) Erfinder: Sauerwein, Thomas, 63868 Großwallstadt (DE); Speck, Uwe, 63743 Aschaffenburg (DE); Bender, Jürgen, 60529 Frankfurt (DE); Stollberg, Markus, 63768 Hösbach (DE); Bischoff, Michael, 63768 Rottenberg (DE)
(74) Vertreter: Staroske, Sandro

(56) Entgegenhaltungen:
- EP-A1- 1 225 098
- EP-A2- 2 325 055
- EP-B1- 1 877 268
- DE-A1- 4 130 978
- DE-A1- 10 057 793
- DE-A1- 19 740 224
- DE-A1-102004 002 360

## Beschreibung

Die Erfindung betrifft eine Übertragungsvorrichtung zum Übertragen eines elektrischen Stroms zu einer Komponente eines Lenkrades eines Kraftfahrzeuges gemäß Anspruch 1, eine Übertragungsvorrichtung gemäß Anspruch 11 sowie ein Verfahren zum Übertragen eines elektrischen Stroms an eine Lenkradkomponente gemäß Anspruch 12.

Aus dem Stand der Technik sind Übertragungsvorrichtungen bekannt, mit denen insbesondere stationär an einer Fahrzeugkarosserie angeordnete elektrische oder elektronische Komponenten (z. B. eine Steuereinheit und/oder eine Stromquelle) mit Komponenten eines Lenkrades, die sich bei Drehen des Lenkrades mitbewegen, elektrisch verbunden werden. Insbesondere werden mit einer derartigen Übertragungsvorrichtung am Lenkrad angeordnete elektrische oder elektronische Komponenten (wie z. B. eine Zündeinheit eines Airbagmoduls, ein Elektromotor eines Überlagerungsantriebs und/oder elektrische Schalter) mit Strom versorgt. Ein Beispiel für eine derartige Übertragungsvorrichtung ist in der DE 4111 699 beschrieben.

Zudem ist aus der gattungsbildenden EP 1 225 098 A1 die Temperaturüberwachung eines Drehverbinders mittels eines Temperatursensors bekannt.

Darüber hinaus offenbart die nachveröffentlichte EP 2 325 055 A2 eine Vorrichtung zur Messung der Temperatur einer Leitung oder eines Leitungsbündels, wobei die Temperaturmessung mit Hilfe einer von einem Messstrom durchflossenen Messleitung, die eine Vielzahl von einer Potentialmessung dienenden Abgriffen aufweist, erfolgt.

Das der vorliegenden Erfindung zugrunde liegende Problem besteht darin, eine Übertragungsvorrichtung und ein Verfahren zu schaffen, mit denen eine möglichst sichere Übertragung eines elektrischen Stromes zu einer in einem Lenkrad angeordneten Komponente ermöglicht wird.

Dieses Problem wird durch die Übertragungsvorrichtung mit den Merkmalen gemäß Anspruch 1 bzw. Anspruch 11 sowie durch das Verfahren mit den Merkmalen des Anspruchs 12 gelöst. Weiterbildungen der Erfindung sind in den abhängigen Ansprüchen angegeben.

Danach wird eine Übertragungsvorrichtung zum Übertragen eines elektrischen Stroms zu einer Komponente eines Lenkrades eines Kraftfahrzeuges bereitgestellt, mit
- einem Rotor, der so an dem Lenkrad anzuordnen ist, dass er gemeinsam mit dem Lenkrad drehbar ist;
- einem Stator, der an einer gegenüber einer Drehbewegung des Lenkrads stationären Komponente des Fahrzeugs anzuordnen ist;
- mindestens einem Leiterelement, über das der Rotor elektrisch mit dem Stator verbunden ist; und
- eine Temperaturbestimmungsvorrichtung zum Bestimmen der Temperatur des Leiterelements oder im Bereich des Leiterelements, wobei
- die Temperaturbestimmungsvorrichtung ausgebildet ist, unter Verwendung eines Temperaturmodells, in das die Stromstärke eines durch das Leiterelement fließenden Stromes, ein Spannungsabfall über das Leiterelement und/oder eine Verlustleistung eingehen, einen mittels der Temperaturbestimmungsvorrichtung gemessenen zeitlichen Verlauf der Temperatur dadurch zu extrapolieren, dass Parameter des Temperaturmodells an den gemessenen Temperaturverlauf angepasst werden.

Der Rotor ist - bezogen auf den montierten Zustand der Übertragungsvorrichtung - insbesondere an dem Lenkrad festgelegt, so dass er bei einer Rotation des Lenkrades mit diesem um die Lenkachse des Lenkrades mitrotiert. Der Stator hingegen ist an einer stationären Baugruppe des Fahrzeugs festegelegt, so dass er sich bei Rotation des Lenkrades nicht mitdreht; beispielsweise ist der Stator an einer Lenksäulenverkleidung des Fahrzeugs befestigt.

Bei dem Leiterelement handelt es sich insbesondere um ein Leiterband, d. h. um einen flachen, flexiblen Träger, auf dem mindestens eine Leiterbahn angeordnet (z. B. aufgedruckt) ist. Insbesondere werden auf dem flexiblen Träger mehrere Leiterbahnen, z. B. auch auf dessen Vorder- und Rückseite, angeordnet sein. Eine Übertragungsvorrichtung mit einem Stator und einem Rotor, die über eine derartige flexible Leiterbahn miteinander verbunden sind, ist z. B. in der EP 1 257 438 B1 beschrieben, auf die insofern ausdrücklich Bezug genommen wird. Es ist natürlich auch möglich, dass andere Arten von Leiterelementen verwendet werden, z.B. ein Leiterdraht oder mehrere separate Drähte.

Die Temperaturbestimmungsvorrichtung umfasst mindestens einen Temperatursensor, der z.B. an dem Leiterelement angeordnet ist. Beispielsweise wird als Temperatursensor ein Thermoelement verwendet, das an dem Leiterelement festgelegt wird, z. B. stoffschlüssig mit dem Leiterelement verbunden wird. Als Temperatursensor können natürlich auch andere Arten von Sensoren verwendet werden, z. B. Widerstandselemente oder Wärmefühler mit einem Schwingquarz. Die Erfindung ist selbstverständlich nicht auf eine bestimmte Art von Temperatursensoren festgelegt, sondern es können im Prinzip beliebige Arten von Temperatursensoren verwendet werden, etwa berührungslose Sensoren wie z.B. faseroptische Temperatursensoren.

Insbesondere ist mindestens ein Temperatursensor der Temperaturbestimmungsvorrichtung an einem rotorseitigen Ende des Leiterelementes und/oder ein mindestens ein Temperatursensor an einem statorseitigen Ende des Leiterelementes angeordnet. Falls das Leiterelement als Leiterband ausgebildet ist, so kann am rotorseitigen Ende und/oder am statorseitigen Ende des Leiterbandes ein Übergangselement (z. B. in Form eines Stanzbleches) vorgesehen sein, über das das Leiterband mit einem Steckerelement verbunden ist. Der Temperatursensor (bzw. die mehreren Temperatursensoren) können an dem Übergangselement selber oder im Bereich des Übergangselementes an dem Leiterband angeordnet (insbesondere dort festgelegt) sein. Darüber hinaus ist denkbar, dass mindestens ein Temperatursensor an dem Rotor und/oder mindestens ein Temperatursensor an dem Stator angeordnet ist.

Das Leiterelement ist insbesondere aufwickelbar, wofür der Rotor beispielsweise eine Wickelfläche ausformt, auf die das Leiterelement aufgewickelt (aufgespult) werden kann. Der Temperatursensor (bzw. die mehreren Temperatursensoren) sind insbesondere so angeordnet, dass eine Temperatur des Leiterbandes sowohl für den Fall bestimmt werden kann, dass das Leiterelement zumindest näherungsweise vollständig auf die Wickelfläche des Rotors aufgewickelt ist, als auch für den Fall, dass das Leiterelement vollständig von der Wickelfläche des Rotors abgewickelt ist und z.B. an einer Fläche des Stators anliegt. Beispielsweise ist hierfür mindestens ein Temperatursensor an dem Rotor und mindestens ein Temperatursensor an dem Stator angeordnet.

Gemäß einer weiteren Ausgestaltung der Erfindung umfasst die Übertragungsvorrichtung eine Überwachungsvorrichtung zum Ermitteln einer Stromstärke eines durch das Leiterelement fließenden Stromes, eines Spannungsabfalls über das Leiterelement und/oder einer bei der Stromübertragung über die Übertragungsvorrichtung auftretenden Verlustleistung.

Die Temperaturbestimmungsvorrichtung ist ausgebildet, anhand von Informationen der Überwachungsvorrichtung bezüglich der ermittelten Stromstärke, der Spannung und/oder der Verlustleistung unter Verwendung eines (numerischen) Temperaturmodells für die Übertragungsvorrichtung die Temperatur des Leiterelements zu bestimmen.
Darüber hinaus kann die Übertragungsvorrichtung eine Steuereinheit aufweisen, die in Abhängigkeit von der bestimmten Temperatur des Leiterelementes, der Stromstärke eines durch das Leiterelement fließenden Stromes, des Spannungsabfalls über das Leiterelement und/oder der Verlustleistung einen Strom durch das Leiterelement steuert. Beispielsweise ist diese Steuereinheit so ausgebildet, dass sie in das Lenkrad des Fahrzeugs integriert werden kann.

Des Weiteren kann die Steuereinheit ausgebildet sein, bei Überschreiten eines vorgebbaren Grenzwertes der Temperatur einen Strom durch das Leiterelement zu reduzieren oder zu unterbrechen. Durch diese Maßnahme ist es möglich, einer Zerstörung des Leiterelementes durch zu hohe Temperaturen entgegenzuwirken. Das Reduzieren oder Unterbrechen des Stromes kann z. B. dadurch erfolgen, dass die Steuereinheit ein entsprechendes Steuersignal an zumindest einige der über die Übertragungsvorrichtung versorgte Komponenten (Verbraucher) im Lenkrad sendet. Hierfür ist die Steuereinheit insbesondere über ein Bussystem (z. B. in Form eines "Local Interconnect Network" (lokales Verbindungsnetzwerk) - LIN oder eines "Controller Area Network" (Feldnetzwerk für Steuerungen) - CAN) mit dem Verbraucher im Lenkrad verbunden. Es ist auch möglich, dass die Steuereinheit einen Schalter steuert, mit dem der Stromfluss über das Leiterelement unterbrochen werden kann.

Des Weiteren ist denkbar, dass die Steuereinheit einen bestimmten zeitlichen Temperaturverlauf unter Verwendung eines Temperaturmodells der Übertragungsvorrichtung extrapoliert, so dass z.B. ermittelbar ist, ob die Temperatur eine zulässige Maximaltemperatur überschreiten wird und wenn ja, zu welchem Zeitpunkt dies erfolgen wird. Beispielsweise ist die Steuereinheit so ausgebildet, dass sie den Strom eines durch das Leiterelement fließenden Stromes reduziert oder unterbricht, wenn der extrapolierte Temperaturverlauf einen vorgebbaren Grenzwert überschreitet. Mit anderen Worten bestimmt die Steuereinheit den zukünftigen Temperaturverlauf und reduziert den Strom durch das Leiterelement, wenn der zukünftige Temperaturverlauf den vorgegebenen Grenzwert (z.B. innerhalb einer vorgebbaren Zeitspanne) überschreiten wird.

Parameter des Temperaturmodells werden unter Verwendung eines Messwertes für eine Stromstärke eines durch das Leiterelement fließenden Stromes, eines Messwertes für einen Spannungsabfall über das Leiterelement und/oder eines Messwertes für eine Verlustleistung eines Stromes durch das Leiterelement bestimmt und somit ein Temperaturverlauf für das Leiterelement simuliert. Sollte dieser simulierte Temperaturverlauf einen vorgebbaren Grenzwert überschreiten, könnte die Steuereinheit den Strom über die Übertragungsvorrichtung reduzieren oder unterbrechen.

In einem zweiten Aspekt betrifft die Erfindung eine Übertragungsvorrichtung zum Übertragen eines elektrischen Stroms zu einer Komponente eines Lenkrades eines Kraftfahrzeugs, mit
- einem Rotor, der so an dem Lenkrad anzuordnen ist, dass er gemeinsam mit dem Lenkrad drehbar ist;
- einem Stator, der an einer gegenüber einer Drehbewegung des Lenkrads stationären Komponente des Fahrzeugs anzuordnen ist;
- mindestens einem Leiterelement, über das der Rotor elektrisch mit dem Stator verbunden ist; und
- einer Spannungsbestimmungseinrichtung zum Bestimmen eines Spannungsabfalls über mindestes einen Abschnitt des Leiterelementes, wobei
- die Spannungsbestimmungseinrichtung ausgebildet ist, einen Spannungsabfall über einen ersten Abschnitt des Leiterelementes, über den der Komponente des Lenkrades Strom zuführbar ist, und einen Spannungsabfall über einen zweiten Abschnitt des Leiterelementes, über den von der Komponente des Lenkrades Strom abführbar ist, zu bestimmen, wobei die Übertragungsvorrichtung eine Steuereinheit aufweist, die ausgebildet ist, die über den ersten und den zweiten Abschnitt des Leiterelementes gemessenen Spannungsabfälle miteinander zu vergleichen und den Strom durch das Leiterelement zu reduzieren oder zu unterbrechen, wenn die gemessenen Werte für die Spannungsabfälle unterschiedlich sind.

Die Spannungsbestimmungseinrichtung dient insbesondere dazu, eine Störung des Leiterelements (z.B. einen Leiterbruch) zu erkennen. Die Steuereinheit steuert den Strom über das Leiterelement in Abhängigkeit von der mittels der Spannungsbestimmungseinrichtung bestimmten Spannung; z.B. reduziert oder unterbricht sie den Strom, wenn die von der Spannungsbestimmungseinrichtung gemessene Spannung auf eine Beschädigung des Leiterelementes hindeutet.

Die Übertragungsvorrichtung kann zudem eine wie oben beschriebene Temperaturbestimmungsvorrichtung zum Bestimmen der Temperatur des Leiterelements oder im Bereich des Leiterelements aufweisen, so dass die Bestimmung des Spannungsabfalls mit der Temperaturmessung kombiniert werden kann. Insbesondere ist die Steuerung ausgebildet, in Abhängigkeit von der durch die Temperaturbestimmungsvorrichtung bestimmten Temperatur und/oder der durch die Spannungsbestimmungseinrichtung bestimmten Spannung einen Strom durch das Leiterelement zu steuern.

Die Spannungsbestimmungseinrichtung ist .ausgebildet, einen Spannungsabfall über einen ersten Abschnitt des Leiterelementes, über den der Komponente im Lenkrad Strom zugeführt wird, und/oder einen Spannungsabfall über einen zweiten Abschnitt des Leiterelementes, über den von der Komponente im Lenkrad Strom abgeführt wird, zu bestimmen. Insbesondere erstreckt sich der erste Abschnitt des Leiterelementes von einem Eingangsanschluss bis zu einem Ausgang, der mit der Komponente verbunden ist. Der zweite Abschnitt des Leiterelementes erstreckt sich z.B. zwischen einem mit der Komponente verbundenen Eingangsanschluss des Leiterelementes und einem Ausgang. Beispielsweise handelt es sich bei der Komponente um eine Steuerungseinrichtung, mit der z.B. weitere elektronische oder elektrische Komponenten ("Verbraucher") des Lenkrades verbunden sind.

Die Steuereinheit, die den Strom durch das Leiterelement steuert, ist so beschaffen, dass sie den über den ersten und den zweiten Abschnitt des Leiterelements gemessenen Spannungsabfall miteinander vergleicht und z.B. den Strom durch das Leiterelement reduziert oder unterbricht, wenn die gemessen Werte für den Spannungsabfall unterschiedlich sind, z.B. kann ein Defekt des ersten (stromzuführenden) Abschnitts des Leiterelementes erkannt werden, wenn der Spannungsabfall über den ersten Abschnitt größer ist als der Spannungsabfall über den zweiten (stromabführenden) Abschnitt.

Die Erfindung betrifft auch ein Lenkrad mit einer wie oben beschrieben ausgebildeten Übertragungsvorrichtung.

Des Weiteren betrifft die Erfindung ein Verfahren zum Übertragen des elektrischen Stroms zu einer Komponente eines Lenkrades eines Kraftfahrzeuges, insbesondere unter Verwendung einer wie oben beschriebenen Vorrichtung, mit den Schritten:
- Bereitstellen eines Rotors, der so an dem Lenkrad anzuordnen ist, dass er gemeinsam mit dem Lenkrad drehbar ist;
- Bereitstellen eines Stators, der an einer gegenüber einer Drehbewegung des Lenkrads stationären Komponente des Fahrzeugs anzuordnen ist;
- Bereitstellen mindestens eines Leiterelements, über das der Rotor elektrisch mit dem Stator verbunden ist; und
- Ermitteln der Temperatur des Leiterelements mittels einer zum Leiterelement separaten Vorrichtung, und
- Bereitstellen eines Temperaturmodells, in das die Stromstärke eines durch das Leiterelement fließenden Stromes, ein Spannungsabfall über das Leiterelement und/oder eine Verlustleistung eingehen, und
- Extrapolieren eines mittels der Temperaturbestimmungsvorrichtung gemessenen zeitlichen Verlaufs der Temperatur unter Verwendung des Temperaturmodells derart, dass Parameter des Temperaturmodells an den gemessenen Temperaturverlauf angepasst werden.

Insbesondere kann der durch Extrapolation eines gemessenen Temperaturverlaufes bestimmte Temperaturverlauf mit einem vorgegebenen Grenzwert der Temperatur verglichen und ein Strom durch das Leiterelement reduziert oder unterbrochen werden, falls der Temperaturverlauf den Grenzwert überschreitet.

Zusätzlich ist auch denkbar, dass eine räumliche Temperaturextrapolation erfolgt, d. h. ausgehend von einer bekannten Temperatur an einem ersten Abschnitt der Übertragungsanordnung wird unter Verwendung eines Temperaturmodells für die Übertragungsvorrichtung eine Temperatur für einen zweiten, zum ersten Abschnitt beabstandeten Abschnitt der Übertragungsanordnung bestimmt. Der erste und/oder der zweite Abschnitt sind z.B. Abschnitte des Leiterelementes. Beispielsweise ist es auf diese Weise möglich, dass ein Temperatursensor nicht unmittelbar an dem Leiterelement angebracht wird, sondern mit einem Abstand zu diesem und dennoch eine Bestimmung der Temperatur des Leiterelementes erfolgen kann.

Die Erfindung wird im Folgenden anhand von Ausführungsbeispielen unter Bezugnahme auf die Figuren näher erläutert. Es zeigen:
- Fig. 1: eine Übertragungsvorrichtung gemäß einem Ausführungsbeispiel der Erfindung;
- Fig. 2: den Verlauf der Temperatur an unterschiedlichen Orten der Übertragungsvorrichtung sowie den zeitlichen Verlauf der Verlustleistung;
- Fig. 3: gemessene Temperaturverläufe im Vergleich mit berechneten Temperaturverläufen;
- Fig. 4: ein Blockschaltbild einer erfindungsgemäßen Übertragungsvorrichtung; und
- Fig. 5: schematisch eine erfindungsgemäße Übertragungsvorrichtung mit einer Spannungsbestimmungseinrichtung.

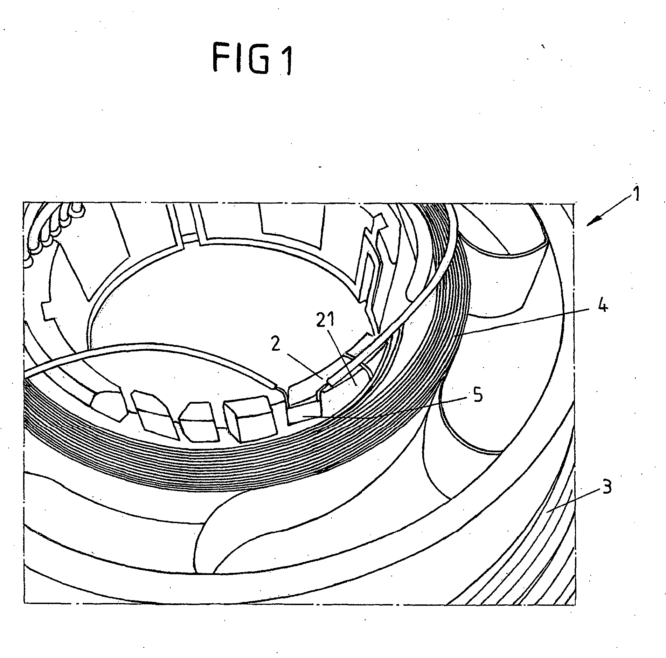

Die in Figur 1 gezeigte erfindungsgemäße Übertragungsvorrichtung 1 (Kontakteinheit) weist einen an einem Lenkrad (nicht dargestellt) zu befestigenden Rotor 2 auf, der über ein Leiterelement in Form eines flexiblen und flachen Leiterbandes 4 mit einem Stator 3 elektrisch verbunden ist. Der Stator 3 ist an einer stationären Komponente (nicht dargestellt) des Fahrzeugs festzulegen, so dass er sich im Unterschied zum Rotor 2 bei einer Rotation des Lenkrades nicht mitdrehen wird. Das Leiterband 4 kann auf eine Wickelfläche 21 des Rotors aufgewickelt werden, wobei Fig. 1 das Leiterband 4 in einem Zustand zeigt, in dem es nahezu vollständig auf die Wickelfläche 21 aufgewickelt ist.

Des Weiteren umfasst die Übertragungsvorrichtung 1 eine Temperaturbestimmungsvorrichtung, die einen Temperatursensor 5 (z.B. in Form eines Widerstandselementes oder eines Thermoelementes) aufweist. Der Temperatursensor 5 ist im gezeigten Beispiel an dem Rotor 2 befestigt und dient insbesondere dazu, die Temperatur (zumindest eines Bereiches) des Leiterbandes 4 in seinem aufgewickelten Zustand zu bestimmen. Die elektrischen Zuleitungen zum Temperatursensor 5 sind in Fig. 1 nur schematisch dargestellt. Es ist selbstverständlich möglich, dass die Zuleitungen auf andere Weise verlaufen; z.B. könnte die elektrische Anbindung des Temperatursensors 5 auch über eine Leiterbahn des Leiterbandes 4 erfolgen.

Es ist darüber hinaus auch denkbar, dass die Temperaturbestimmungsvorrichtung weitere Temperatursensoren umfasst; z. B. kann zumindest ein Temperatursensor auch an dem Stator 3 angeordnet sein, so dass die Temperatur des Leiterbandes 4 auch bestimmt werden kann, wenn dieses vollständig von der Wickelfläche 21 abgewickelt ist und z.B. an einer Oberfläche des Stators 3 anliegt.

Die Übertragungsvorrichtung weist insbesondere auch eine Überwachungsvorrichtung zum Ermitteln der Stromstärke eines durch das Leiterelement 4 fließenden Stromes auf, wobei beispielsweise die Stromstärke eines durch eine der Leiterbahnen des Leiterbandes fließenden Stromes gemessen wird. Es ist natürlich auch denkbar, dass die Überwachungsvorrichtung dazu ausgebildet ist, die Stromstärke der durch einige oder alle der Leiterbahnen des Leiterbandes fließenden Ströme zu ermitteln. Des Weiteren kann die Überwachungsvorrichtung dazu vorgesehen sein, einen Spannungsabfall über das Leiterband hinweg und/oder eine Verlustleistung, die beim Energieübertrag über das Leiterband entsteht, zu ermitteln.

Die Überwachungsvorrichtung ist insbesondere als elektronischer Schaltkreis ausgebildet, der beispielsweise (zumindest teilweise) am oder im Lenkrad positioniert wird oder an dem Rotor und/oder dem Stator angeordnet ist. Auch ist denkbar, dass der Rotor und/oder der Stator ein Gehäuse der Übertragungsvorrichtung ausbildet und der elektronische Schaltkreis innerhalb dieses Gehäuses platziert ist.

Die Übertragungsvorrichtung 1 weist auch eine Steuereinheit (z. B. in Form eines elektronischen Schaltkreises nach Art einer "Electronic Control Unit" (elektronische Steuereinheit) - ECU) auf, die den Strom durch das Leiterband (bzw. durch nur einige der Leiterbahnen des Leiterbandes) in Abhängigkeit von der Temperatur des Leiterele- mentes, der Stromstärke des durch das Leiterelement hindurch fließenden Stromes, des Spannungsabfalls über das Leiterband und/oder der Verlustleistung steuert.

Die Steuereinheit kann z. B. ebenso wie die Überwachungsvorrichtung an dem Rotor und/oder dem Stator oder an anderer Stelle im Lenkrad angeordnet sein. Es ist auch denkbar, dass die Überwachungsvorrichtung und die Steuereinheit in Form eines gemeinsamen elektronischen Bausteins ausgebildet sind. Es ist natürlich auch möglich, dass die Steuereinheit nicht im Lenkrad, sondern (z.B. zusammen mit der Bordelektronik) an anderer Stelle im Fahrzeug angeordnet ist.

Die Steuereinheit ist so beschaffen, dass sie unter Verwendung der mittels des Sensors 5 gemessenen Temperatur und z. B. weiterer Kenngrößen wie die angesprochene Verlustleistung oder den durch das Leiterband fließenden Strom bzw. den über das Leiterelement auftretenden Spannungsabfall einen zeitlichen Verlauf der Temperatur des Leiterbandes simuliert oder extrapoliert. Insbesondere veranlasst die Steuereinheit eine Reduzierung oder Unterbrechung des Stromes durch das Leiterband, wenn der simulierte oder extrapolierte Verlauf einen vorgebbaren Grenzwert überschrei-tet.

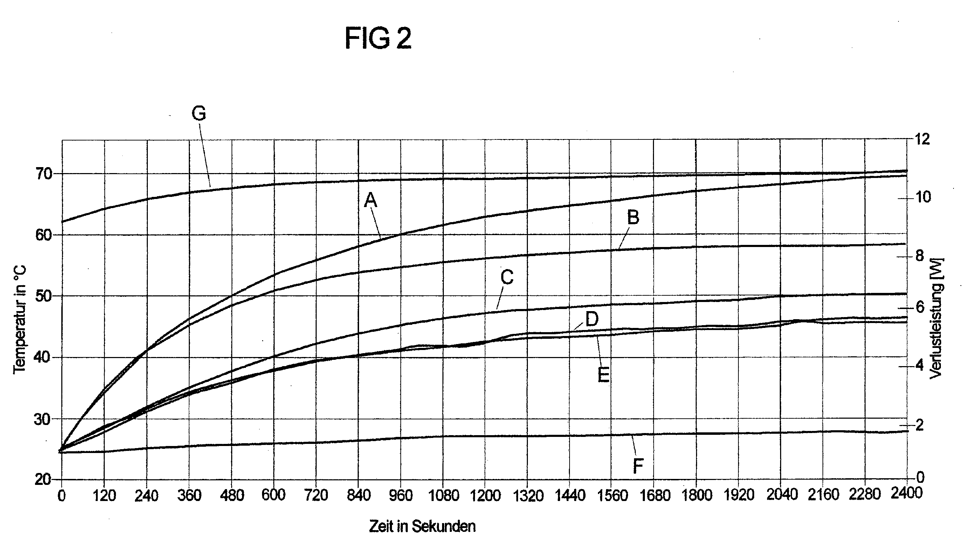

Figur 2 zeigt verschiedene Temperaturverläufe, die mit an unterschiedlichen Positionen der Übertragungsvorrichtung angeordneten Temperatursensoren gemessen wurden. Die Kurve A bezieht sich auf die mittels eines im Bereich des Rotors angeordneten Temperatursensors ermittelte Temperatur, während sich die Kurve B auf eine Temperatur bezieht, 35 die mit einem im Bereich des Stators angeordneten Sensor gemessen wurde. Weitere Sensoren befanden sich im luftgefüllten Volumen innerhalb des Rotors (Kurve C), zwischen Rotor und Stator (Kurve D), außen an einer (z.B. von dem Rotor oder dem Stator ausgebildeten) Abdeckung der Übertragungsvorrichtung (Kurve E) und außerhalb und beabstandet zur Übertragungsvorrichtung (Kurve F).

Des Weiteren zeigt Figur 2 die beim Stromtransport durch das Leiterband auftretende Verlustleistung (Kurve G), wobei das Leiterband eine Querschnittsfläche von 2 x 1,73 mm² aufwies und ein Strom mit einer Stromstärke von 20 A über das Leiterband übertragen wurde.

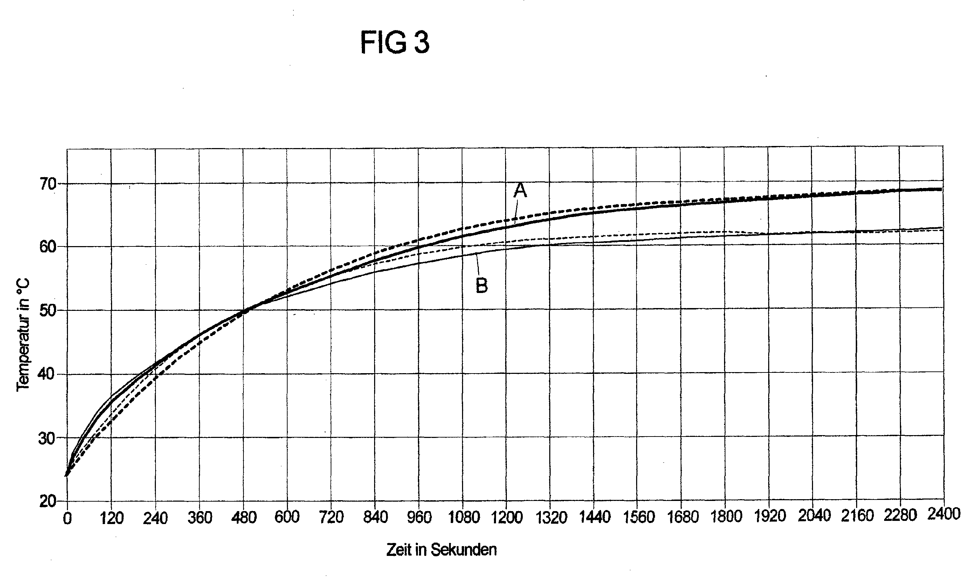

Figur 3 zeigt den Temperaturverlauf gemäß den Kurven A und B aus Figur 2 (durchgezogene Linien). Zusätzlich wurde für die Übertragungsvorrichtung ein numerisches Temperaturmodell entwickelt, mit dem der zeitliche Verlauf der Temperatur im Leiterband berechnet werden kann (gestrichelte Linien). In das Modell gehen wie erwähnt gemessene elektrische Kenngrößen wie die Stromstärke, der Spannungsabfall und/oder die Verlustleistung ein. Zudem geht auch der gemessene Temperaturverlauf in das Modell ein, wobei Parameter des Modells an den gemessenen Temperaturverlauf angepasst (angefittet) werden, um den gemessenen Temperaturverlauf zu extrapolieren.

Damit ist es z.B. möglich, auf Basis eines für einen bestimmten Zeitraum bestimmten Temperaturverlaufs auf einen späteren Temperaturverlauf bzw. auf eine Temperatur zu einem späteren Zeitpunkt zu schließen. Insbesondere kann der extrapolierte oder simulierte Temperaturverlauf auch herangezogen werden, um zu überprüfen, ob die Temperatur im Leiterband zu einem späteren Zeitpunkt einen vorgebbaren Temperaturgrenzwert überschreiten wird. In diesem Fall könnte die Steuereinheit, insbesondere wenn das Überschreiten des Grenzwertes innerhalb eines ebenfalls vorgebbaren Zeitraums nach Inbetriebnahme der Übertragungsvorrichtung erfolgen wird, den Stromfluss durch das Leiterband unterbrechen oder zumindest reduzieren, um einer Zerstörung des Leiterbandes durch Temperatureinwirkung vorzubeugen.

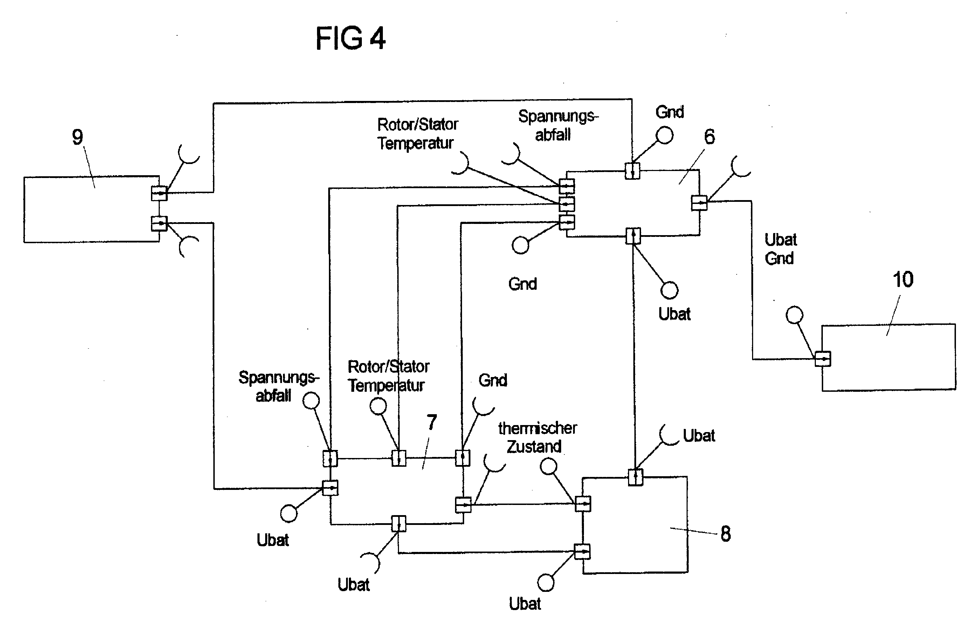

In Figur 4 ist ein Ausführungsbeispiel der Übertragungsvorrichtung in einem Blockschaltbild dargestellt. Danach ist eine Einheit 6 aus Rotor, Stator, Leiterband, Temperaturbestimmungsvorrichtung (mit Ausgang "Rotor-Stator-Temperatur") und einer Überwachungsvorrichtung (mit Ausgang "Spannungsabfall") zum Ermitteln eines Spannungsabfalls über das Leiterband mit einer Steuereinheit 7 verbunden.

Die Steuereinheit 7 ist wie oben beschrieben dazu ausgebildet, in Abhängigkeit von den Eingangsgrößen "Temperatur am Leiterband" und "Spannungsabfall über das Leiterband" einen Stromfluss durch das Leiterband zu unterbinden. Hierzu ist die Steuereinheit 7 mit einem Schalter 8 verbunden, der auf ein Steuersignal der Steuereinheit 7 hin in die Aus-Stellung schaltet, in der er den Stromfluss über das Leiterband unterbricht.

Die Einheit 6 und die Steuereinheit 7 sind mit einer Stromquelle 9 des Fahrzeugs verbunden. Die Steuereinheit 7 kann zudem über das Leiterband Steuersignale an eine im Lenkrad untergebrachte weitere Steuereinheit 10 ("Lenkrad-ECU") senden, um eine Reduzierung der Leistungsaufnahme von im Lenkrad vorhandenen und über die ECU 10 gesteuerten Komponenten zu veranlassen. Beispielsweise wird die ECU 10 auf ein entsprechendes Steuersignal der Steuereinheit 7 hin einzelne elektrische oder elektronische Komponenten des Lenkrades abschalten. Es ist auch möglich, dass die Steuereinheit 7 und die ECU 10 zu einer gemeinsamen Einheit zusammengefasst sind.

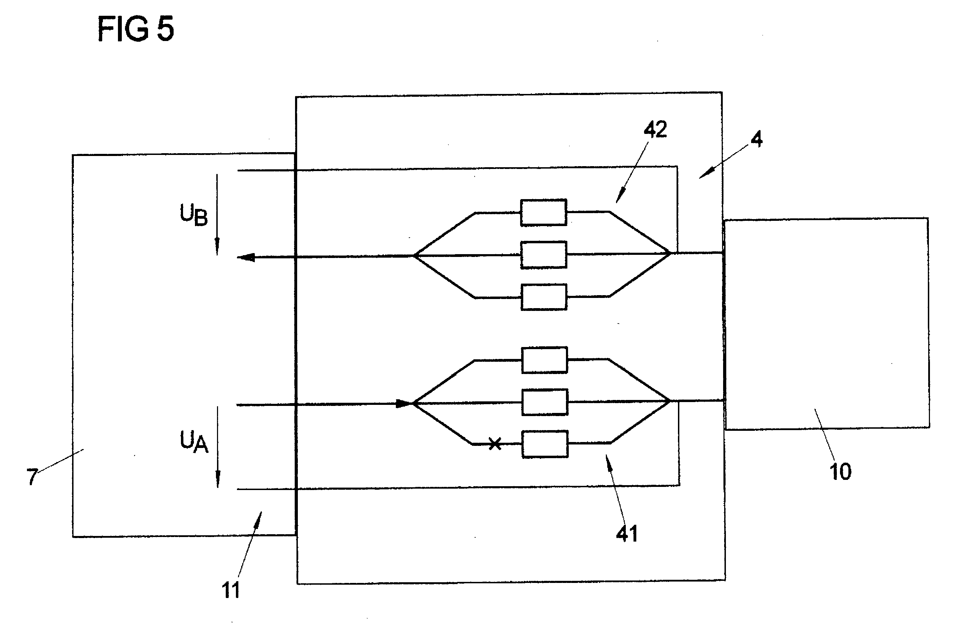

Fig. 5 zeigt schematisch eine erfindungsgemäße Übertragungsvorrichtung, die über eine Spannungsbestimmungseinrichtung 11 zum Bestimmen eines Spannungsabfalls U_{A} über einen ersten Abschnitt 41 des als Leiterband 4 (Flachleiter) ausgebildeten Leiterelementes sowie eines Spannungsabfalls U_{B} über einen zweiten Abschnitt 42 des Leiterbandes 4 verfügt.

Über den ersten Abschnitt 41 des Leiterbandes 4 wird einer Komponente in Form einer Steuerungseinrichtung 10 (Lenkrad-ECU) Strom zugeführt (Stromrichtung durch Pfeil in einem zuführenden Leiter angedeutet) und über den zweiten Abschnitt 42 (Stromrichtung durch Pfeil in einem abführenden Leiter angedeutet) Strom von der Steuerungseinrichtung 10 abgeführt. Der erste Abschnitt 41 erstreckt sich z.B. von einem Eingangsanschluss bis zu einem mit der Steuerungseinrichtung 10 verbundenen Ausgang des Leiterbandes 4 und der zweite Abschnitt 42 von einem mit der Steuerungseinrichtung 10 verbundenen Eingang bis zum einem Ausgangsanschluss des Leiterbandes 4. Beispielsweise erstrecken sich beide Abschnitte 41, 42 zwischen einem ersten und einem zweiten Steckeranschluss des Leiterbandes 4.

Die Übertragungseinrichtung weist zudem eine Steuereinheit 7 auf, die in Abhängigkeit von den mittels der Spannungsbestimmungseinrichtung 11 über den ersten und den zweiten Abschnitt 41, 42 gemessenen Spannungen einen Strom durch das Leiterband 4 steuert.

Die Steuereinheit 7 vergleicht den Spannungsabfall U_{A} über den ersten Abschnitt 41 mit dem Spannungsabfalls U_{B} über den zweiten Abschnitt 42 und reduziert oder unterbricht den Strom durch das Leiterband 4, falls der Spannungsabfall U_{A} von dem Spannungsabfall U_{B} abweicht, z.B. wird aufgrund des Defekts im ersten Abschnitt 41 die Spannung U_{A} größer sein als die Spannung U_{B}. Beispielsweise beträgt der Spannungsabfall U_{B} über den nicht defekten zweiten Abschnitt 42 150 mV bei einer Stromstärke von 10A, während der Spannungsabfall über den beschädigten ersten Abschnitt 41 z.B. über 200 mV beträgt.

Die Übertragungseinrichtung der Fig. 5 kann selbstverständlich mit einer Temperaturbestimmungsvorrichtung gemäß z.B. den Fig. 1 und 4 kombiniert werden, wobei die Steuereinheit 7 insbesondere ausgebildet ist, den Strom durch das Leiterband 4 in Abhängigkeit von der mit der Temperaturbestimmungsvorrichtung bestimmten Temperatur und/oder von der durch die Spannungsbestimmungseinrichtung bestimmten Spannung (d.h. den Spannungsabfällen U_{B} oder U_{A}) zu steuern.

### Bezugszeichenliste

- 1: Übertragungsvorrichtung
- 2: Rotor
- 3: Stator
- 4: Leiterband
- 5: Temperatursensor
- 6: Einheit
- 7: Steuereinheit
- 8: Schalter
- 9: Stromquelle
- 10: Lenkrad-Steuereinheit
- 11: Spannungsbestimmungseinrichtung
- 41: erster Abschnitt
- 42: zweiter Abschnitt

## Patentansprüche

1. Übertragungsvorrichtung zum Übertragen eines elektrischen Stroms zu mindestens einer Komponente eines Lenkrades eines Kraftfahrzeugs, mit
- einem Rotor (2), der so an dem Lenkrad anzuordnen ist, dass er gemeinsam mit dem Lenkrad drehbar ist;
- einem Stator (3), der an einer gegenüber einer Drehbewegung des Lenkrads stationären Komponente des Fahrzeugs anzuordnen ist;
- mindestens einem Leiterelement (4), über das der Rotor (2) elektrisch mit dem Stator (3) verbunden ist; und
- eine Temperaturbestimmungsvorrichtung zum Bestimmen der Temperatur des Leiterelements (4) oder im Bereich des Leiterelements (4),
**dadurch gekennzeichnet, dass**
die Temperaturbestimmungsvorrichtung ausgebildet ist, unter Verwendung eines Temperaturmodells, in das die Stromstärke eines durch das Leiterelement (4) fließenden Stromes, ein Spannungsabfall über das Leiterelement (4) und/oder eine Verlustleistung eingehen, einen mittels der Temperaturbestimmungsvorrichtung gemessenen zeitlichen Verlauf der Temperatur dadurch zu extrapolieren, dass Parameter des Temperaturmodells an den gemessenen Temperaturverlauf angepasst werden.

2. Übertragungsvorrichtung nach Anspruch 1, **dadurch gekennzeichnet, dass** die Temperaturbestimmungsvorrichtung mindestens einen an dem Leiterelement (4) angeordneten Temperatursensor umfasst.

3. Übertragungsvorrichtung nach Anspruch 2, **dadurch gekennzeichnet, dass** mindestens ein Temperatursensor an einem rotorseitigen Ende des Leiterelementes (4) und/oder mindestens ein Temperatursensor an einem statorseitigen Ende des Leiterelementes (4) angeordnet ist.

4. Übertragungsvorrichtung nach einem der Ansprüche 2 oder 3, **dadurch gekennzeichnet, dass** mindestens ein Temperatursensor (5) an dem Rotor (2) und/oder mindestens ein Temperatursensor an dem Stator (3) angeordnet ist.

5. Übertragungsvorrichtung nach einem der vorhergehenden Ansprüche, **gekennzeichnet durch** eine Überwachungsvorrichtung zum Ermitteln einer Stromstärke eines durch das Leiterelement (4) fließenden Stromes, eines Spannungsabfalls über das Leiterelement (4) und/oder einer Verlustleistung.

6. Übertragungsvorrichtung nach Anspruch 5, **gekennzeichnet durch** eine Steuereinheit (7), die in Abhängigkeit von der bestimmten Temperatur des Leiterelements (4), der Stromstärke des **durch** das Leiterelement (4) fließenden Stromes, des Spannungsabfalls über das Leiterelement (4) und/oder der Verlustleistung einen Strom **durch** das Leiterelement (4) steuert.

7. Übertragungsvorrichtung nach Anspruch 6, **dadurch gekennzeichnet, dass** die Steuereinheit (7) bei Überschreiten eines vorgebbaren Grenzwertes der Temperatur einen Strom durch das Leiterelement (4) reduziert oder unterbricht.

8. Übertragungsvorrichtung nach Anspruch 6 oder 7, **dadurch gekennzeichnet, dass** die Steuereinheit (7) den Verlauf der Temperatur extrapoliert und einen Strom durch das Leiterelement (4) reduziert oder unterbricht, wenn der extrapolierte Verlauf der Temperatur einen vorgebbaren Grenzwert überschreitet.

9. Übertragungsvorrichtung nach einem der Ansprüche 6 bis 8, **gekennzeichnet durch** ein Bussystem, über das die Steuereinheit (7) mit der über die Übertragungsvorrichtung mit Strom zu versorgenden Komponente des Lenkrades verbindbar ist.

10. Übertragungsvorrichtung nach einem der vorhergehenden Ansprüche, **dadurch gekennzeichnet, dass** das Leiterelement einen flexiblen Träger umfasst, auf dem mindesten eine Leiterbahn angeordnet ist.

11. Übertragungsvorrichtung zum Übertragen eines elektrischen Stroms zu mindestens einer Komponente eines Lenkrades eines Kraftfahrzeugs, insbesondere nach einem der vorhergehenden Ansprüche, mit
- einem Rotor (2), der so an dem Lenkrad anzuordnen ist, dass er gemeinsam mit dem Lenkrad drehbar ist;
- einem Stator (3), der an einer gegenüber einer Drehbewegung des Lenkrads stationären Komponente des Fahrzeugs anzuordnen ist;
- mindestens einem Leiterelement (4), über das der Rotor (2) elektrisch mit dem Stator (3) verbunden ist; und
- einer Spannungsbestimmungseinrichtung (11) zum Bestimmen eines Spannungsabfalls (U_{A}, U_{B}) über mindestens einen Abschnitt (41, 42) des Leiterelementes (4),
**dadurch gekennzeichnet, dass**
die Spannungsbestimmungseinrichtung (11) ausgebildet ist, einen Spannungsabfall (U_{A}) über einen ersten Abschnitt (41) des Leiterelementes (4), über den der Komponente des Lenkrades Strom zuführbar ist, und einen Spannungsabfall (U_{B}) über einen zweiten Abschnitt (42) des Leiterelementes (4), über den von der Komponente (10) des Lenkrades Strom abführbar ist, zu bestimmen, wobei die Übertragungsvorrichtung eine Steuereinheit (7) aufweist, die ausgebildet ist, die über den ersten und den zweiten Abschnitt (41, 42) des Leiterelementes (4) gemessenen Spannungsabfälle (U_{A}, U_{B}) miteinander zu vergleichen und den Strom durch das Leiterelement (4) zu reduzieren oder zu unterbrechen, wenn die gemessenen Werte für die Spannungsabfälle (U_{A}, U_{B}) unterschiedlich sind.

12. Verfahren zum Übertragen eines elektrischen Stroms zu einer Komponente eines Lenkrades eines Kraftfahrzeugs, insbesondere unter Verwendung einer Vorrichtung gemäß einem der vorhergehenden Ansprüche, mit den Schritten:
- Bereitstellen eines Rotors (2), der so an dem Lenkrad anzuordnen ist, dass er gemeinsam mit dem Lenkrad drehbar ist;
- Bereitstellen eines Stators (3), der an einer gegenüber einer Drehbewegung des Lenkrads stationären Komponente des Fahrzeugs anzuordnen ist;
- Bereitstellen mindestens eines Leiterelements (4), über das der Rotor (2) elektrisch mit dem Stator (3) verbunden ist; und
- Ermitteln der Temperatur des Leiterelements (4) oder im Bereich des Leiterelements (4), und
- Bereitstellen eines Temperaturmodells, in das die Stromstärke eines durch das Leiterelement (4) fließenden Stromes, ein Spannungsabfall über das Leiterelement (4) und/oder eine Verlustleistung eingehen, und
- Extrapolieren eines mittels der Temperaturbestimmungsvorrichtung gemessenen zeitlichen Verlaufs der Temperatur unter Verwendung des Temperaturmodells derart, dass Parameter des Temperaturmodells an den gemessenen Temperaturverlauf angepasst werden.

13. Verfahren nach Anspruch 12, **dadurch gekennzeichnet, dass**
- der extrapolierte Temperaturverlauf mit einem vorgegebenen Grenzwert der Temperatur verglichen wird;
- ein Strom durch das Leiterelement (4) reduziert oder unterbrochen wird, falls der extrapolierte Temperaturverlauf den vorgebbaren Grenzwert überschreitet.

14. Verfahren nach Anspruch 12 oder 13, **dadurch gekennzeichnet, dass** eine Temperatur für einen ersten Abschnitt der Übertragungsanordnung (1) ermittelt wird und unter Verwendung des Temperaturmodells eine Temperatur für einen zweiten Abschnitt der Übertragungsanordnung (1) bestimmt wird.

## Claims

1. Transmission device for transmission of an electrical current to at least one component of a steering wheel of a motor vehicle, having
- a rotor (2) which is to be arranged on the steering wheel such that it can rotate together with the steering wheel;
- a stator (3) which is to be arranged on a component of the vehicle which is stationary with respect to a rotary movement of the steering wheel;
- at least one conductor element (4) via which the rotor (2) is electrically connected to the stator (3); and
- a temperature determining device for determining the temperature of the conductor element (4) or in the region of the conductor element (4),
**characterized in that**
the temperature determining device is designed to extrapolate a temporal profile of the temperature, which is measured by means of the temperature determining device, using a temperature model in which the current strength of a current flowing through the conductor element (4), a voltage drop across the conductor element (4) and/or a power loss are included, such that parameters of the temperature model are adapted to the measured temperature profile.

2. Transmission device according to Claim 1, **characterized in that** the temperature determining device comprises at least one temperature sensor arranged on the conductor element (4).

3. Transmission device according to Claim 2, **characterized in that** at least one temperature sensor is arranged at a rotor-side end of the conductor element (4) and/or at least one temperature sensor is arranged at a stator-side end of the conductor element (4).

4. Transmission device according to either of Claims 2 and 3, **characterized in that** at least one temperature sensor (5) is arranged at the rotor (2) and/or at least one temperature sensor is arranged at the stator (3).

5. Transmission device according to any of the preceding claims, **characterized by** a monitoring device for calculating a current strength of a current flowing through the conductor element (4), a voltage drop across the conductor element (4) and/or a power loss.

6. Transmission device according to Claim 5, **characterized by** a control unit (7) which controls a current through the conductor element (4) on the basis of the determined temperature of the conductor element (4), the current strength of the current flowing through the conductor element (4), the voltage drop across the conductor element (4) and/or the power loss.

7. Transmission device according to Claim 6, **characterized in that** the control unit (7) reduces or interrupts a current through the conductor element (4) in the event of a predefinable limit value of the temperature being exceeded.

8. Transmission device according to Claim 6 or 7, **characterized in that** the control unit (7) extrapolates the profile of the temperature and reduces or interrupts a current through the conductor element (4) if the extrapolated profile of the temperature exceeds a predefinable limit value.

9. Transmission device according to any of Claims 6 to 8, **characterized by** a bus system via which the control unit (7) is connectable to the component of the steering wheel which is to be supplied with current via the transmission device.

10. Transmission device according to any of the preceding claims, **characterized in that** the conductor element comprises a flexible carrier on which at least one conductor track is arranged.

11. Transmission device for transmission of an electrical current to at least one component of a steering wheel of a motor vehicle, in particular according to any of the preceding claims, having
- a rotor (2) which is to be arranged on the steering wheel such that it can rotate together with the steering wheel;
- a stator (3) which is to be arranged on a component of the vehicle which is stationary with respect to a rotary movement of the steering wheel;
- at least one conductor element (4) via which the rotor (2) is electrically connected to the stator (3); and
- a voltage determining equipment (11) for determining a voltage drop (U_{A}, U_{B}) across at least one section (41, 42) of the conductor element (4),
**characterized in that**
the voltage determining equipment (11) is designed to determine a voltage drop (U_{A}) across a first section (41) of the conductor element (4), via which current can be supplied to the component of the steering wheel, and a voltage drop (U_{B}) across a second section (42) of the conductor element (4), via which current can be conducted away from the component (10) of the steering wheel, wherein the transmission device comprises a control unit (7) which is designed to compare the voltage drops (U_{A}, U_{B}) measured across the first and the second section (41, 42) of the conductor element (4) with one another and to reduce or to interrupt the current through the conductor element (4) if the measured values for the voltage drops (U_{A}, U_{B}) are different.

12. Method for transmission of an electrical current to a component of a steering wheel of a motor vehicle, in particular using a device according to any of the preceding claims, with the steps of:
- providing a rotor (2) which is to be arranged on the steering wheel such that it can rotate together with the steering wheel;
- providing a stator (3) which is to be arranged on a component of the vehicle which is stationary with respect to a rotary movement of the steering wheel;
- providing at least one conductor element (4) via which the rotor (2) is electrically connected to the stator (3); and
- determining the temperature of the conductor element (4) or in the region of the conductor element (4), and
- providing a temperature model in which the current strength of a current flowing through the conductor element (4), a voltage drop across the conductor element (4) and/or a power loss are included, and
- extrapolating a temporal profile of the temperature, which is measured by means of the temperature determining device, using the temperature model such that parameters of the temperature model are adapted to the measured temperature profile.

13. Method according to Claim 12, **characterized in that**
- the extrapolated temperature profile is compared to a predefined limit value of the temperature; and
- a current through the conductor element (4) is reduced or interrupted if the extrapolated temperature profile exceeds the predefinable limit value.

14. Method according to Claim 12 or 13, **characterized in that** a temperature is calculated for a first section of the transmission arrangement (1) and a temperature is determined using the temperature model for a second section of the transmission arrangement (1).

## Revendications

1. Dispositif de transmission pour la transmission d'un courant électrique à au moins un composant d'un volant de direction d'un véhicule automobile, comprenant
- un rotor (2) devant être disposé sur le volant de direction de telle sorte qu'il puisse tourner conjointement avec le volant de direction ;
- un stator (3) devant être disposé sur un composant stationnaire du véhicule automobile par rapport à un mouvement de rotation du volant de direction ;
- au moins un élément conducteur (4) par le biais duquel le rotor (2) est connecté électriquement au stator (3) ; et
- un dispositif de détermination de température pour déterminer la température de l'élément conducteur (4) ou dans la région de l'élément conducteur (4),
**caractérisé en ce que**
le dispositif de détermination de température est réalisé, en utilisant un modèle de température dans lequel l'intensité du courant d'un courant s'écoulant à travers l'élément conducteur (4), une chute de tension en travers de l'élément conducteur (4) et/ou une perte de puissance sont prises en considération, pour extrapoler une courbe de température dans le temps mesurée au moyen du dispositif de détermination de température, par le fait que les paramètres du modèle de température sont adaptés à la courbe de température mesurée.

2. Dispositif de transmission selon la revendication 1, **caractérisé en ce que** le dispositif de détermination de température comprend au moins un capteur de température disposé sur l'élément conducteur (4).

3. Dispositif de transmission selon la revendication 2, **caractérisé en ce qu'**au moins un capteur de température est disposé sur une extrémité côté rotor de l'élément conducteur (4) et/ou au moins un capteur de température est disposée sur une extrémité côté stator de l'élément conducteur (4).

4. Dispositif de transmission selon l'une quelconque des revendications 2 ou 3, **caractérisé en ce qu'**au moins un capteur de température (5) est disposé sur le rotor (2) et/ou au moins un capteur de température est disposé sur le stator (3).

5. Dispositif de transmission selon l'une quelconque des revendications précédentes, **caractérisé par** un dispositif de surveillance pour déterminer une intensité de courant d'un courant s'écoulant à travers l'élément conducteur (4), une chute de tension en travers de l'élément conducteur (4) et/ou une perte de puissance.

6. Dispositif de transmission selon la revendication 5, **caractérisé par** une unité de commande (7) qui, en fonction de la température déterminée de l'élément conducteur (4), de l'intensité de courant du courant s'écoulant à travers l'élément conducteur (4), de la chute de tension en travers de l'élément conducteur (4) et/ou de la perte de puissance, commande un courant à travers l'élément conducteur (4).

7. Dispositif de transmission selon la revendication 6, **caractérisé en ce que** l'unité de commande (7), dans le cas de dépassement d'une valeur limite prédéfinissable de la température, réduit ou coupe un courant à travers l'élément conducteur (4).

8. Dispositif de transmission selon la revendication 6 ou 7, **caractérisé en ce que** l'unité de commande (7) extrapole la courbe de température et réduit ou coupe un courant à travers l'élément conducteur (4) si l'allure extrapolée de la température dépasse une valeur limite prédéfinissable.

9. Dispositif selon l'une quelconque des revendications 6 à 8, **caractérisé par** un système de bus, par le biais duquel l'unité de commande (7) peut être connectée au composant du volant de direction devant être alimenté en courant par le biais du dispositif de transmission.

10. Dispositif de transmission selon l'une quelconque des revendications précédentes, **caractérisé en ce que** l'élément conducteur comprend un support flexible sur lequel est disposée au moins une piste conductrice.

11. Dispositif de transmission pour la transmission d'un courant électrique à au moins un composant d'un volant de direction d'un véhicule automobile, en particulier selon l'une quelconque des revendications précédentes, comprenant
- un rotor (2) devant être disposé sur le volant de direction de telle sorte qu'il puisse tourner conjointement avec le volant de direction ;
- un stator (3) devant être disposé sur un composant stationnaire du véhicule automobile par rapport à un mouvement de rotation du volant de direction ;
- au moins un élément conducteur (4) par le biais duquel le rotor (2) est connecté électriquement au stator (3) ; et
- un dispositif de détermination de tension (11) pour déterminer une chute de tension (U_{A}, U_{B}) en travers d'au moins une portion (41, 42) de l'élément conducteur (4),
**caractérisé en ce que**
le dispositif de détermination de tension (11) est réalisé pour déterminer une chute de tension (U_{A}) en travers d'une première portion (41) de l'élément conducteur (4), par le biais de laquelle du courant peut être acheminé au composant du volant de direction, et une chute de tension (U_{B}) en travers d'une deuxième portion (42) de l'élément conducteur (4), par le biais de laquelle du courant peut être prélevé du composant (10) du volant de direction, le dispositif de transmission présentant une unité de commande (7) qui est réalisée pour comparer l'une à l'autre les chutes de tension (U_{A}, U_{B}) mesurées en travers de la première et de la deuxième portion (41, 42) de l'élément conducteur (4) et pour réduire ou couper le courant à travers l'élément conducteur (4) si les valeurs mesurées pour les chutes de tension (U_{A}, U_{B}) sont différentes.

12. Procédé pour transmettre un courant électrique à un composant d'un volant de direction d'un véhicule automobile, en particulier en utilisant un dispositif selon l'une quelconque des revendications précédentes, comprenant les étapes suivantes :
- fournir un rotor (2) devant être disposé sur le volant de direction de telle sorte qu'il puisse tourner conjointement avec le volant de direction ;
- fournir un stator (3) devant être disposé sur un composant stationnaire du véhicule automobile par rapport à un mouvement de rotation du volant de direction ;
- fournir au moins un élément conducteur (4) par le biais duquel le rotor (2) est connecté électriquement au stator (3) ; et
- déterminer la température de l'élément conducteur (4) ou dans la région de l'élément conducteur (4), et
- fournir un modèle de température dans lequel l'intensité du courant d'un courant s'écoulant à travers l'élément conducteur (4), une chute de tension en travers de l'élément conducteur (4) et/ou une perte de puissance sont prises en considération, et
- extrapoler une courbe de température dans le temps mesurée au moyen du dispositif de détermination de température, en utilisant le modèle de température de telle sorte que les paramètres du modèle de température soient adaptés à la courbe de température mesurée.

13. Procédé selon la revendication 12, **caractérisé en ce que**
- la courbe de température extrapolée est comparée avec une valeur limite prédéfinie de la température ;
- un courant à travers l'élément conducteur (4) est réduit ou coupé, si la courbe de température extrapolée dépasse la valeur limite prédéfinissable.

14. Procédé selon la revendication 12 ou 13, **caractérisé en ce qu'**une température pour une première portion de l'agencement de transmission (1) est déterminée et, en utilisant le modèle de température, une température pour une deuxième portion de l'agencement de transmission (1) est déterminée.
